## Europäisches Patentamt

## European Patent Office

## Office européen des brevets

(11) Veröffentlichungsnummer: **0 279 936**
**B1**

(12) **EUROPÄISCHE PATENTSCHRIFT**

(45) Veröffentlichungstag der Patentschrift:
03.10.90

(21) Anmeldenummer: **87118505.4**

(22) Anmeldetag: **14.12.87**

(51) Int. Cl.⁵: **F16B 13/06**

(54) **Dübel mit Spreizhülse.**

(30) Priorität: **09.03.87 DE 3707510**
**21.02.87 DE 3705654**
**06.06.87 DE 3719034**

(43) Veröffentlichungstag der Anmeldung:
**31.08.88 Patentblatt 88/35**

(45) Bekanntmachung des Hinweises auf die Patenterteilung:
**03.10.90 Patentblatt 90/40**

(84) Benannte Vertragsstaaten:
**AT BE CH ES FR GB GR IT LI NL SE**

(56) Entgegenhaltungen:
**AT-B- 288 658**
**DE-A- 2 247 003**
**DE-A- 3 110 485**
**DE-A- 3 420 375**
**US-A- 4 122 753**

(73) Patentinhaber: **fischerwerke Artur Fischer GmbH & Co. KG, Weinhalde 14 - 18,**
**D-7244 Waldachtal 3/Tumlingen(DE)**

(72) Erfinder: **Fischer, Arthur, Prof. Dr. h. c., Weinhalde 34,**
**D-7244 Waldachtal 3/Tumlingen(DE)**

**Beschreibung**

Die Erfindung betrifft einen Dübel mit Spreizhülse gemäß der Gattung des Anspruchs 1 bzw. 8.

Dübel der obengenannten Art werden in der Weise verankert, daß der Spreizkörper in die Spreizhülse hineingezogen wird, wobei sich die Spreizhülse an einem Lagerelement abstützt, welches beispielsweise von einer Distanzhülse gebildet werden kann. Die Distanzhülse liegt dabei am Gegenlager der Schraube an, welches vom Schraubenkopf oder einer an ihm anliegenden Unterlagscheibe gebildet wird. Bei Verwendung einer Distanzhülse als Lagerelement wird zwischen Spreizhülse und Distanzhülse eine zusätzliche Kunststoffhülse als Stauchzone notwenig, um ein sicheres Verspannen des Dübels mit einem zu befestigen Gegenstand zu gewährleisten. Aus der DE-A 3 420 375 ist ein derartiger Dübel bekannt. Die zusätzliche Kunststoffhülse besitzt jedoch nur eine sehr geringfügige radiale Elastizität, weshalb bei einer Bohrlocherweiterung die Kunststoffhülse nicht mehr fest an der Bohrlochwandung angreift und somit nicht mehr als Lagerelement wirksam sein kann.

Es sind auch andere Dübel mit Spreizhülse bekannt, bei denen die Spreizhülse sich beim Einziehen des Spreizkörpers im Bohrloch festkrallt, ohne daß die Spreizhülse an einem Lagerelement anliegt.

Der Einsatz solcher Dübel in der Zugzone eines Ankergrundes erfordert ein hohes Nachspreizvermögen, um bei der Erweiterung des Bohrloches durch Rißbildung eine Abminderung des Haltewertes zu vermeiden. Durch die nach der Verankerung des Dübels zwischen Spreizhülse und Spreizkörper wirkende Reibung kann in sehr ungünstigen Fällen bei einer Bohrlocherweiterung durch Rißbildung durch die am Spreizkörper angreifende Last die Spreizhülse und damit der gesamte Dübel ohne die Bohrlocherweiterung durch Nachspreizen auszugleichen, aus dem Bohrloch gezogen werden.

Der Erfindung liegt die Aufgabe zugrunde, das Nachspreizvermögen des eingangs erwähnten Dübels soweit zu verbessern, daß er in der Lage ist, die durch Rißbildung auftretende Bohrlocherweiterung durch Nachrutschen des Spreizkörpers in die Spreizhülse auszugleichen.

Die Lösung dieser Aufgabe wird durch die im Hauptanspruch angegebenen Merkmale erhalten. Beim Einsetzen des erfindungsgemäßen Dübels in ein vorbereitetes Bohrloch im Ankergrund wird der Federring auf den mindestens dem Außendurchmesser der Spreizhülse entsprechenden Bohrlochdurchmesser zusammengedrückt. Damit ist für das Eintreiben des Dübels in das Bohrloch kein nennenswerter zusätzlicher Kraftaufwand erforderlich. Nach dem Einsetzen des Dübels wird durch Drehen der Schraube der Spreizkörper in axialer Richtung bewegt und in die Spreizhülse zu deren Verankerung im Bohrloch eingezogen. Dabei kann die Spreizhülse sich mittelbar oder unmittelbar am Federring abstützen, da der Federring fest gegen die Bohrlochwandung verspannt ist. Beim Aufspreizen der Spreizhülse kann der Federring sich auch über ein Gegenlager am Schraubenkopf abstützen.

Tritt nunmehr durch Rißbildung eine Bohrlocherweiterung auf, so ist der Federring in der Lage, sich dieser Bohrlocherweiterung anzupassen und die Spreizhülse gegen eine axiale Bewegung abzustützen. Damit wird zwangsläufig erreicht, daß die am Spreizkörper angreifende Last die Reibung zwischen Spreizkörper und Spreizhülse überwindet und den Spreiz körper in die Spreizhülse einzieht. Durch die damit verbundene verstärkte Aufspreizung der Spreizhülse wird die Bohrlocherweiterung ausgeglichen.

Der Federring kann mit seiner der Spreizhülse abgewandten Seite an einer Ringfläche anliegen, die am Dübel angeformt oder durch die Stirnseite eines aufgeschraubten Elementes bzw. einer Distanzhülse gebildet sein kann. Beim Einschlagen des Dübels in das Bohrloch stützt sich der Federring an dieser Ringfläche ab. Um eine Zentrierung des Federrings vor und während der Montage zu erhalten, kann an einer ihm benachbarten Ringfläche ein entsprechend dem Querschnitt des Federrings angepaßter ringförmiger Vorsprung ausgebildet sein. Der Federring sitzt auf diesem Vorsprung nicht nur zentriert auf, vielmehr wirkt dieser ringförmige Vorsprung beim Zusammenpressen des Federrings, daß der Federring eine axiale Kraft auf die Spreizhülse ausübt, wodurch das Aufspreizen unterstützt wird.

Besitzt der Dübel eine zwischen Schraubenkopf und Federring angeordnete Distanzhülse, die das Gegenlager für die Spreizhülse bildet, so kann in vorteilhafter Weise eine Stauchzone dem Federring benachbart sein. Der Federring kann entweder zwischen der Distanzhülse und einer die Stauchzone bildenden Kunststoffhülse oder zwischen der Kunststoffhülse und der Spreizhülse angeordnet werden. Bei letzterer Anordnung ist eine Ausgestaltung zweckmäßig, bei der die Spreizhülse einen abgesetzten und mit einem Teil seiner Länge in die Kunststoffhülse eingreifenden Abschnitt aufweist, auf den der Federring übergestülpt ist.

Beim Eintreiben des Dübels in die Aufnahmebohrung im Ankergrund wird der den Außendurchmesser der Spreizhülse überragende Federring auf den Durchmesser der Aufnahmebohrung zusammengedrückt. Da in der Regel bei der Herstellung der Bohrung im Bereich der Bohrlochmündung durch Abplatzungen eine trichterförmige Erweiterung entsteht, ist ein Eintreiben des Dübels mit überstehendem Federring ohne größere Schwierigkeiten möglich ist. Bei scharfkantigen Bohrungen ohne Mündungstrichter kann allerdings durch den überstehenden Federring ein Eintreibwiderstand auftreten, zu desen Überwindung stärkere Hammerschlage mit der Gefahr der Schädigung des Dübels erforderlich sind.

Um ein leichtes Eintreiben des Dübel auch bei nicht ausgebrochenen Bohrlöchern zu ermöglichen, kann ein in der Spreizhülse angeordneter Federring verwendet werden. Durch den in einer ringförmigen Erweiterung der Spreizhülse sitzender Federring wird nur das dem Spreizkörper abgewandte Ende der Spreizhülse über den Durchmesser des Bohrloches hinaus aufgeweitet, während das andere Ende der Spreizhülse einen etwa kleineren ·Au-

Bendurchmesser als der Bohrungsdurchmesser aufweist. Dadurch bildet die Außenfläche der Spreizhülse eine Anlaufschräge, die bei geringem Eintreibwiderstand ein Zusammendrücken der Spreizhülse auf den Bohrlochdurchmesser zuläßt. Nach dem Einsetzen des Dübels wird durch Drehen der Schraube der Spreizkörper in axialer Richtung bewegt und in die Spreizhülse zu deren Verankerung im Bohrloch eingezogen. Tritt nunmehr durch Rißbildung eine Bohrlocherweiterung auf, so ist das eine Ende der Spreizhülse durch den elastischen Federring in der Lage sich dieser Bohrlocherweiterung anzupassen und fest im Bohrloch zu verspannen. Damit wird zwangsläufig erreicht, daß die am Spreizkörper angreifende Last die Reibung zwischen Spreizkörper und Spreizhülse überwindet und den Spreizkörper in die Spreizhülse einzieht.

Durch dieses Nachrutschen des Spreizkörpers und der damit verbundenen verstärkten Aufspreizung der Spreizhülse wird die Bohrlocherweiterung ausgeglichen.

Das Stirnende der Erweiterung kann einen Teil des Federringprofils überdecken. Dadurch ist der Federring gegen Herausfallen aus der ringförmigen Erweiterung der Innenbohrung der Spreizhülse gesichert.

Des weiteren kann der Federringspalt mit dem durchgehenden Schlitz der Spreizhülse fluchten. Durch diese Ausgestaltung wird eine optimale Nutzung der radialen Spannkraft des Federringes zur Aufweitung der Spreizhülse erreicht.

In der Zeichnung sind Ausführungsbeispiele der Erfindung dargestellt.

Es zeigen:

Figur 1 den im Bohrloch eingesetzten Dübel mit einem zwischen der Kunststoff- und Distanzhülse angordneten Federring,

Figur 2 einen zwischen Spreizhülse und Kunststoffhülse angeordneten Federring,

Figur 3 einen Dübel, bei dem der Federring zwischen Spreizhülse und einer Ringfläche eines aufgeschraubten Elementes angeordnet ist,

Figur 4 einen Dübel mit in der Spreizhülse angeordneten Federring.

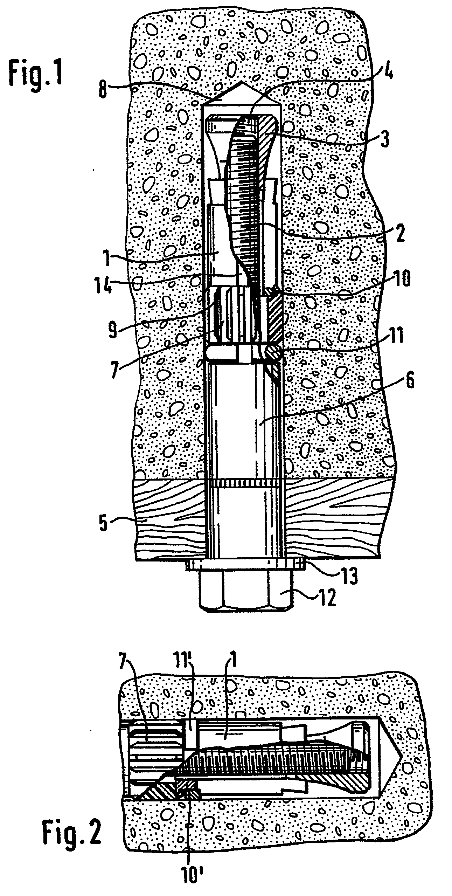

Der Dübel gemäß Figur 1 besteht aus der von ihrem einführseitigen Stirnende bis über einen Teil ihrer Länge mehrfach geschlitzten Spreizhülse 1, und dem über eine Schraube 2 in die Spreizhülse 1 zu deren Aufweitung einziehbaren Spreizkörper 3. Zur Verbindung des Spreizkörpers mit der Schraube weist der Spreizkörper 3 ein dem Gewinde der Schraube angepaßtes Innengewinde 4 auf. Zur Überbrückung von Hohllagen bei der Verspannung des zu befestigenden Gegenstandes 5 ist zwischen der Spreizhülse 1 und der Distanzhülse 6 als Stauchzone eine Kunststoffhülse 7 angeordnet, die gleichzeitig durch die Verbindung mit der Spreizhülse 1 und den sich im Bohrloch 8 verspannenden Längsrippen 9 als Mitdrehsicherung für die Spreizhülse 1 dient. Zur Verbindung der Spreizhülse 1 mit der Kunststoffhülse 7 weist die Spreizhülse einen abgesetzten Abschnitt 10 auf, der in die Innenbohrung der Kunststoffhülse 7 eingreift. Zwischen der Distanzhülse 6 und der Kunststoffhülse 7 ist ein Federring 11 angeordnet, dessen Außendurchmesser den Durchmesser der Spreizhülse überragt. Für einen Dübel bis etwa 12 mm Bohrlochdurchmesser ist ein Übermaß des Federringes 11 von ca. 1 mm für größere Bohrlochdurchmesser ein Übermaß bis etwa 1,5 mm zweckmäßig.

Aufgrund des Übermaßes des Federringes 11 preßt sich dieser nach dem Eintreiben des Dübels in das Bohrloch 8 fest an die Bohrlochwandung. Als Gegenlager zum Verspannen des zu befestigenden Gegenstandes 5 und zum Einziehen des Spreizkörpers 3 dient der Schraubenkopf 12, der sich über die Unterlagscheibe 13 an der Außenfläche des zu befestigenden Gegenstandes abstützt. Durch Aufbringen eines Drehmomentes auf den Schraubenkopf 12 wird der Spreizkörper 3 in die Spreizhülse 1 eingezogen. Dabei werden die durch die Längsschlitze 14 gebildeten Spreizlamellen der Spreizhülse 1 radial in die Bohrlochwandung eingepreßt. Tritt nach der Verankerung durch Rißbildung eine Bohrlocherweiterung auf, verhindert der an der Bohrlochwandung verpreßte Federring 11 eine axiale Verschiebung der Spreizhülse 1. Damit wird zwangsweise ein weiteres Einziehen des Spreizkörpers 3 in die Spreizhülse erreicht, so daß durch die zusätzliche Aufspreizung der Spreizhülse 1 die Bohrlocherweiterung ausgeglichen wird.

Bei der Anordnung des Federringes 11' zwischen der Spreizhülse 1 und Kunststoffhülse 7 nach Figur 2 sitzt der Federring 11' auf dem abgesetzten, in die Kunststoffhülse 7 eingreifenden verlängerten Abschnitt 10' der Spreizhülse 1. Da bei dieser Lösung eine geringere Drahtdicke des Federringes 11' erforderlich ist, empfiehlt sich ein aus einem Draht mit rechteckigem Querschnitt hergestellter Federring.

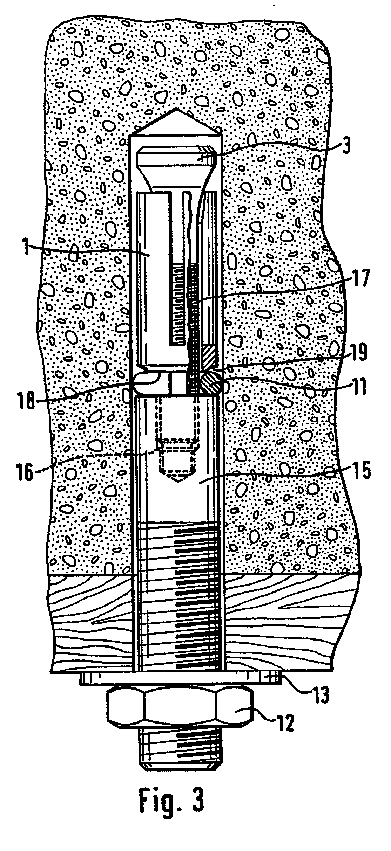

In Figur 3 ist ein weiteres Ausführungsbeispiel dargestellt, bei dem der Federring 11 zwischen der Spreizhülse 1 und einem Gewindebolzen 15 positioniert ist. Der Gewindebolzen 15 mit dem Spreizkörper 3 über einen in eine Gewindebohrung 16 des Gewindebolzens eingreifenden Gewindeabschnitt 17 verbunden. Bei kleineren Dübeldurchmessern kann der Spreizkörper 3 am Gewindebolzen 15 angeformt sein. An der Stirnseite 18 des Spreizkörpers 1 ist eine entsprechend der Querschnittsform des Federrings 11 vorspringende Ringfläche 19 ausgebildet, die den Federring 11 vor und während der Montage zentriert. Außerdem unterstützt diese vorspringende Ringfläche 19 den Spreizvorgang.

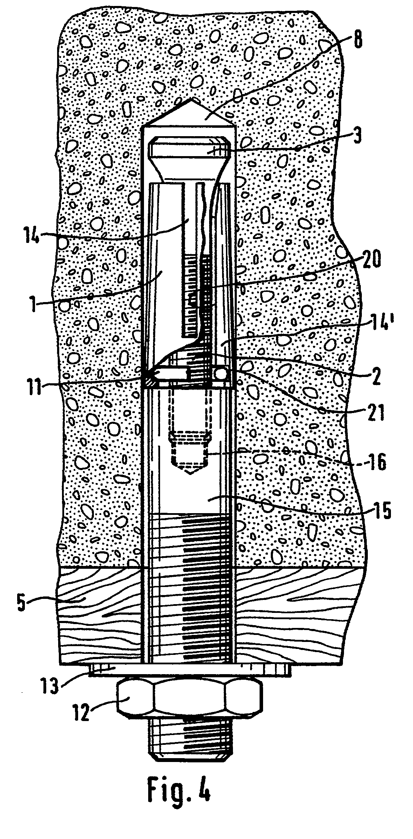

Der Dübel nach Figur 4 besteht aus der von ihrem einführseitigen Stirnende bis über einen Teil ihrer Länge mehrfach geschlitzten und wenigstens einen durchgehenden Schlitz 14' aufweisenden Spreizhülse 1, und dem über eine Schraube 2 in die Spreizhülse 1 zu deren Aufweitung einziehbaren Spreizkörper 3. Der Spreizkörper ist mit der Schraube 2 einstückig verbunden, die wiederum zur Verbindung mit dem Gewindebolzen 15 in dessen Gewindebohrung 16 eingreift. Die Innenbohrung 20 der Spreizhülse 1 ist an ihrem dem Spreizkörper abgewandten Ende mit einer ringförmigen Erweiterung 21 versehen, in die der Federring 11 eingesetzt ist. Über den Federring 11 wird dieses Ende der Spreizhülse 1 auf einen den Außendurchmesser des Dübels überragenden Durchmesser aufgeweitet.

Aufgrund des Übermaßes dieses Spreizhülsenendes preßt sich diese nach dem Eintreiben des Dübels in das Bohrloch 8 fest an die Bohrlochwandung an. Als Gegenlager zum Verspannen des zu befestigenden Gegenstandes 5 und zum Einziehen des Spreizkörper 3 dient die Mutter 12, die sich über die Unterlagsscheibe 13 an der Außenfläche des zu befestigenden Gegenstandes abstützt. Durch Aufbringen eines Drehmomentes auf Mutter 12 wird der Spreizkörpers 3 in die Spreizhülse 1 eingezogen. Dabei werden die durch die Längsschlitze 14 gebildeten Spreizlamellen der Spreizhülse 1 radial in die Bohrlochwandung eingepreßt. Tritt nach der Verankerung durch Rißbildung eine Bohrlocherweiterung auf, verhindert das durch den Federring 11 fest an der Bohrlochwandung verspannte Spreizhülsenende eine axiale Verschiebung der Spreizhülse 1. Damit wird zwangsweise ein weiteres Einziehen des Spreizkörpers 2 in die Spreizhülse erreicht, so daß durch die zusätzliche Aufspreizung der Spreizhülse 1 die Bohrlocherweiterung ausgeglichen wird.

Zur Sicherung des Federringes 11 in der ringförmigen Erweiterung 21 der Spreizhülse 1 überdeckt das Stirnende der Erweiterung einen Teil des Federrringprofils. Ferner ist der Federring 11 in der Erweiterung 21 zur optimalen Nutzung der Spannkraft des Federringes so angeordnet, daß der Federringspalt mit dem durchgehenden Schlitz 14 der Spreizhülse 1 fluchtet.

## Patentansprüche

1. Dübel mit Spreizhülse, einem in die Spreizhülse mittels einer Schraube einziehbaren Spreizkörper und mit einem Lagerelement, an dem sich die Spreizhülse beim Einziehen des Spreizkörpers abstützt, **dadurch gekennzeichnet**, daß als Lagerelement auf die Schraube (2) ein Federring (11, 11') aufgebracht ist, der einen den Durchmesser der Spreizhülse (1) überragenden Außendurchmesser aufweist und auf den Durchmesser der Spreizhülse (1) zusammendrückbar ist. Priorität: 21.02.87; P 37 05 654.9

2. Dübel nach Anspruch 1, **dadurch gekennzeichnet**, daß der Federring (11) mit seiner der Spreizhülse (1) abgewandten Seite an einer ein Gegenlager bildenden, am Dübel ausgebildeten Ringfläche anliegt. Priorität: 09.03.87; P 37 07 510.1

3. Dübel nach Anspruch 2, **dadurch gekennzeichnet**, daß die Ringfläche von der Stirnseite einer auf der Schraube (2) befindlichen Distanzhülse (6), einem aufgeschraubten Element (15), einer an der Schraube (2) angeformten Stufe oder dgl. gebildet ist. Priorität: 09.03.87; P 37 07 510.1

4. Dübel nach einem der vorhergehenden Ansprüche, **dadurch gekennzeichnet**, daß der Federring (11) seitlich an einer entsprechend der Querschnittsform des Federrings (11) vorspringenden Ringfläche (19) anliegt.

5. Dübel nach einem der vorhergehenden Ansprüche, **dadurch gekennzeichnet**, daß an dem Federring (11, 11') eine Stauchzone angrenzt.

6. Dübel nach Anspruch 5, **dadurch gekennzeichnet**, daß die Stauchzone als an die Spreizhülse (1) angrenzende Kunststoffhülse (7) ausgebildet ist, und daß die Spreizhülse (1) einen abgesetzten mit einem Teil seiner Länge in die Kunststoffhülse (7) eingreifenden Abschnitt (10, 10') aufweist, auf den der Federring (11, 11') übergestülpt ist.

7. Dübel nach einem der vorhergehenden Ansprüche, **dadurch gekennzeichnet**, daß der Federring (11') einen wenigstens teilweise kantigen Querschnitt hat.

8. Dübel mit Spreizhülse, einem in die wenigstens einen durchgehenden Schlitz aufweisenden Spreizhülse mittels einer Schraube einziehbaren Spreizkörper, und mit einem die Spreizhülse im Bohrloch fixierenden Lagerelement, **dadurch gekennzeichnet**, daß die Innenbohrung (20) der Spreizhülse (1) an ihrem dem Spreizkörper abgewandten Ende eine ringförmige Erweiterung (21) aufweist, in der als Lagerelement ein Federring (11) eingesetzt ist, und daß durch den Federring (11) das Spreizhülsenende auf einen den Außendurchmesser des Dübels überragenden Durchmesser aufweit- und im Bohrloch (8) auf dessen Durchmesser zusammendrückbar ist.

9. Dübel nach Anspruch 8, **dadurch gekennzeichnet**, daß das Stirnende der Erweiterung einen Teil des Federringprofils überdeckt.

10. Dübel nach Anspruch 8, **dadurch gekennzeichnet**, daß der Federringspalt mit dem durchgehenden Schlitz der Spreizhülse fluchtet.

## Claims

1. A plug with expansible sleeve, an expander body retractable by means of a screw into the expansible sleeve, and a bearing element against which the expansible sleeve is braced as the expander body is retracted, characterized in that, as bearing element there is arranged on the screw (2) a ring-shaped spring member (11, 11') which has an external diameter projecting beyond the diameter of the expansible sleeve (1) and which can be compressed to the diameter of the expansible sleeve (1).

2. A plug according to claim 1, characterized in that the ring-shaped spring member (11) lies with its side remote from the expansible sleeve (1) at an annular surface formed on the plug and forming a counter bearing.

3. A plug according to claim 2, characterized in that the annular surface is formed by the fore end of a spacer sleeve (6) arranged on the screw (2), by a screw-on element (15), by a step formed on the screw (2), or by similar means.

4. A plug according to one of the preceding claims, characterized in that the ring-shaped spring member (11) lies laterally at an upstanding annular surface (19) corresponding to the cross-sectional shape of the ring-shaped spring member (11).

5. A plug according to one of the preceding claims, characterized in that a zone which bulges when compressed adjoins the ring-shaped spring member (11, 11').

6. A plug according to claim 5, characterized in that the zone which bulges when compressed is formed as a plastics sleeve (7) adjoining the expansible sleeve (1), and the expansible sleeve (1) has a stepped portion (10, 10') engaging for a part of its length in the plastics sleeve (7), over which portion the ring-shaped spring member (11, 11') is positioned.

7. A plug according to one of the preceding claims, characterized in that the ring-shaped spring member (11') has a cross-section that is at least partially sharp-cornered.

8. A plug with expansible sleeve, an expander body retractable by means of a screw into the expansible sleeve, which sleeve has at least one continuous slot, and with a bearing element fixing the expansible sleeve in the drill hole, characterized in that, at its end remote from the expander body, the internal bore (20) of the expansible sleeve (1) has an annular enlargement (21) into which a ring-shaped spring member (11) is inserted as bearing element, and by means of the ring-shaped spring member (11) the end of the expansible sleeve can be expanded to a diameter projecting beyond the external diameter of the plug and can be compressed in the drill hole (8) to the diameter thereof.

9. A plug according to claim 8, characterized in that the fore end of the enlargement covers a portion of the ring-shaped spring member profile.

10. A plug according to claim 8, characterized in that the break in the ring-shaped spring member is aligned with the continuous slot of the expansible sleeve.

## Revendications

1. Cheville comportant une douille à expansion, un corps d'expansion susceptible d'être tiré au moyen d'une vis dans la douille à expansion et un élément d'appui, sur lequel s'appuie la douille à expansion lorsque le corps d'expansion est tiré dans celle-ci, cheville caractérisée en ce que l'on met en place sur la vis (2), pour servir d'élément d'appui, un anneau-ressort (11, 11'), qui présente un diamètre extérieur excédant le diamètre de la cheville (1) à expansion et qui peut être comprimé sur lui-même pour atteindre le diamètre de la douille (1) à expansion.

2. Cheville selon la revendication 1, caractérisée en ce que l'anneau-ressort (11) s'appuie, par son côté situé à l'opposé de la douille (1) à expansion, sur une surface annulaire, qui est formée sur la cheville et qui constitue un contre-appui.

3. Cheville selon la revendication 2, caractérisée en ce que la surface annulaire est formée par le côté frontal d'une douille (6) d'espacement qui se trouve sur la vis (2), par un élément (15) vissé, par un degré formé sur la vis (2) ou par un aménagement similaire.

4. Cheville selon une des revendications précédentes, caractérisée en ce que l'anneau-ressort (11) s'appuie latéralement sur une surface annulaire (19), qui fait saillie en correspondance avec la forme de section transversale de l'anneau-ressort.

5. Cheville selon l'une des revendications précédentes, caractérisée en ce qu'une zone de refoulement est située à proximité de l'anneau-ressort (11, 11').

6. Cheville selon la revendication 5, caractérisée en ce que la zone de refoulement est constituée par une douille (7) en matière plastique, située à proximité de la douille (1) à expansion, et en ce que la douille (1) à expansion présente une partie (10, 10') qui pénètre sur une partie de sa longueur dans la douille (7) en matière plastique et sur laquelle est enfilé l'anneau-ressort (11, 11'),

7. Cheville selon l'une des revendications précédentes, caractérisée en ce que l'anneau-ressort (11') a une section transversale présentant au moins partiellement des arêtes ou des pans.

8. Cheville comportant une douille à expansion, un corps d'expansion susceptible d'être tiré au moyen d'une vis dans la douille à expansion et présentant au moins une fente qui le traverse, et un élément d'appui qui fixe la douille à expansion dans le perçage, cheville caractérisée en ce que l'alésage intérieur (20) de la douille (1) à expansion présente, sur son côté situé à l'opposé du corps d'expansion, une extension (21) de forme annulaire, dans laquelle est placé un anneau-ressort (11) servant d'appui, et en ce que l'extrémité de la douille à expansion s'élargit sous l'effet de l'anneau-ressort (11) jusqu'à atteindre un diamètre qui excède le diamètre extérieur de la cheville et cette extrémité peut être comprimée sur elle-même dans le perçage (8) en atteignant le diamètre de celui-ci.

9. Cheville selon la revendication 8, caractérisée en ce que l'extrémité frontale de l'extension recouvre une partie du profil de l'anneau-ressort.

10. Cheville selon la revendication 8, caractérisée en ce que l'anneau-ressort est en alignement avec la fente qui traverse la douille à expansion.

Fig.1

Fig.2

Fig. 3

Fig. 4